# EUROPEAN PATENT SPECIFICATION

(11) **EP 1 692 892 B1**
(45) Date of publication and mention of the grant of the patent: **23.03.2011**
(21) Application number: 03774259.0
(22) Date of filing: 19.11.2003
(51) Int. Cl.: H04M 3/42

(54) **METHOD FOR SETTING SUBSTITUTE RINGBACK TONE OF CALLING PARTY IN MOBILE COMMUNICATIONS SYSTEM**
VERFAHREN ZUM EINSTELLEN EINES ERSATZ-RÜCKRUFTONS DES ANRUFERS IN EINEM MOBILKOMMUNIKATIONSSYSTEM
PROCEDE DE REGLAGE DE SIGNAL DE RAPPEL D'APPELANT DE SUBSTITUTION DANS UN SYSTEME DE COMMUNICATIONS MOBILE

(43) Date of publication of application: 23.08.2006
(73) Proprietor: RealNetworks Asia Pacific Co., Ltd., Seodaemun-gu Seoul (KR)
(72) Inventor: KIM, Sok-Bom, 143-200 Seoul (KR); KWON, Seong-Yil, Seodaemun-gu, 120-709 Seoul (KR)
(74) Representative: Bokinge, Ole
(86) International application number: PCT/KR2003/002496
(87) International publication number: WO 2005/051015

(56) References cited:
- JP-A- 2003 274 016
- KR-A- 2002 097 046
- KR-A- 2003 067 613
- KR-A- 20030 067 613

## Description

### TECHNICAL FIELD

The present invention relates to a call setup process in a communications network and, more particularly, to a method for setting substitute ringback tone which is provided to a calling party until a called party responds to a call during a call setup process.

### BACKGROUND ART

When a calling subscriber originates a call in a communications network, a terminating switch provides a ringback tone until a called subscriber responds to the call. Recently, a substitute ringback tone service providing substitute tone designated by the phone user instead of uniform ringback tone having a fixed frequency and a fixed intermission period became increasingly popular with the phone users.

Methods for providing the substitute ringback tone are disclosed, for example, in Korean Patent No. 292089 issued 20 March 2001 and entitled **METHOD AND APPARATUS FOR GENERATING SUBSTITUTE RINGBACK TONE DESIGNATED BY CALLED PARTY IN TERMINATING SWITCH IN COMMUNICATIONS NETWORK**, and Korean Laid-open Patent 2002-56833 published 10 July 2002 and entitled METHOD AND **APPARATUS FOR PROVIDED SUBSCRIBER-BASED SUBSTITUTE RINGBACK TONE.**

According to such services, the user can select and set his or her own substitute ringback tone, so that, when a call terminating to the user is generated, the switch reproduces the substitute ringback tone instead of the ringback tone to provide to the caller until the user responds to the call. The substitute ringback tone, which may be a musical melody, a sound, a sound effect, or a advertisement message, enables the user to emphasize the personality and reduce uniformity and monotony. Also, a called party can identify an erroneous connection based on the personalized substitute ringback tone even before the response of the called party.

Conventionally, however, when a calling party feels like selecting the substitute ringback tone of the called party for his or her own substitute tone while hearing the substitute tone of the called party, it is difficult for the caller to set the substitute ringback tone to be identical with that of the called party. That is, the user who wishes to change the substitute ringback tone into that of the called party has to search the tone from the server of the contents provider through the Internet, the WAP-based wireless Internet, or the ARS system, which may cause the user to consume much time and expenses. In particular, when a plurality of contents providers provide the service, the burden of searching is worsen.

### DISCLOSURE OF THE INVENTION

To solve the above problem, one object of the present invention is to provide a method of setting substitute ringback tone which enables a calling party to set his/her substitute ringback tone to be identical with that of a called party while hearing the substitute ringback tone of the called party.

Another object of the present invention is to provide a method of setting substitute ringback tone which enables a calling party to set his/her substitute ringback tone to be identical with that of a called party after completing a call and confirming the change of the tone.

Yet another object of the present invention is to provide a method of setting substitute ringback tone which enables a calling party to set his/her substitute ringback tone to be identical with that of another user by accessing a server through a communications network at any time after the completion of a call.

Still yet another object of the present invention is to provide a method of setting substitute ringback tone which enables a user access a server through a communications network to present a substitute ringback tone to a third party so that the substitute ringback tone of the third party is changed after the confirmation of the third party.

The method of setting the substitute ringback tone for achieving the above objects is implemented in a system connected to a mobile switching center to provide a substitute ringback tone to a caller terminal when the mobile switching center suspends a call to a called terminal and requests a service by providing an identification code of the called terminal. The system includes a play control server for storing substitute ringback tone information set for each service subscriber, and a play server for storing various substitute ringback tones and reproducing and providing one of the various substitute ringback tones in response to the request of the mobile switching center and based on the setting information stored in the play control server.

According to an aspect of the present invention, when the system receives a call including the identification code of the called terminal from the mobile switching center, the system identifies a tone code for the called terminal from the play control server, and reproduces the substitute ringback tone having an identified tone code to provide to the caller terminal. When a predetermined key input is received from the caller terminal during the reproduction, the system checks the identification code of the caller terminal and the tone code for the called terminal, and stores in the play control server, so that the substitute ringback tone of the caller terminal is set to be identical with the substitute ringback tone of the called terminal. After the completion of the change, the system preferably sends a short message to the caller terminal for notifying change of the substitute ringback tone.

In the case that the system provides the substitute ringback tone service only for service subscribers, it is preferable that the system carries out the process of changing the tone after determining whether the caller terminal is subscribed to the service whenever receiving the predetermined key input. It is preferable that the system sends a short message to the caller terminal for advising the subscription of the service when the caller terminal is not subscribed to the service.

According to another aspect of the present invention, the system sends a short message to the caller terminal for inviting the caller terminal to connect to the system when the predetermined key input is received from the caller terminal, and changes the tone of the caller terminal only when the caller confirms the change.

According to yet another aspect of the present invention, the system enables a user change his or her substitute ringback tone to be identical with that of another user by accessing a server at any time. First, the system receives a phone number of a third party from the user through a communications network and identifies the substitute ringback tone of the third party from the play control server. Subsequently, the system changes the substitute ringback tone of the user by storing the phone number of the user and the tone code for the third party in the play control server after receiving the confirmation of the user. In the case that the system provides the substitute ringback tone service only for service subscribers, it is preferable that the system carries out the process of changing the tone after determining whether the caller terminal is subscribed to the service.

According to still yet another aspect of the present invention, a user can present a substitute ringback tone to a third party. The system makes a user to select a phone number of the third party and the substitute ringback tone to be presented to the third party. Then, the system sends a short message to the third party for inviting the third party to connect to the system. When the third party is connected to the system, the system receives a confirmation for change of the substitute ringback tone of the third party and changes the tone by storing the identification code of the third party and the selected tone code in the play control server.

### BRIEF DESCRIPTION OF THE DRAWINGS

The above objectives and advantages of the present invention will become more apparent by describing in detail preferred embodiments thereof with reference to the attached drawings in which:
FIG. 1 illustrates an embodiment of a mobile communications system for implementing the method of setting substitute ringback tone of the present invention;
FIG. 2 is a flowchart showing a first embodiment of the method of setting substitute ringback tone of the present invention;
FIG. 3 is a flowchart showing a second embodiment of the method of setting substitute ringback tone of the present invention;
FIG. 4 is a flowchart showing a third embodiment of the method of setting substitute ringback tone of the present invention; and
FIG. 5 is a flowchart showing a fourth embodiment of the method of setting substitute ringback tone of the present invention.

### EMBODIMENTS

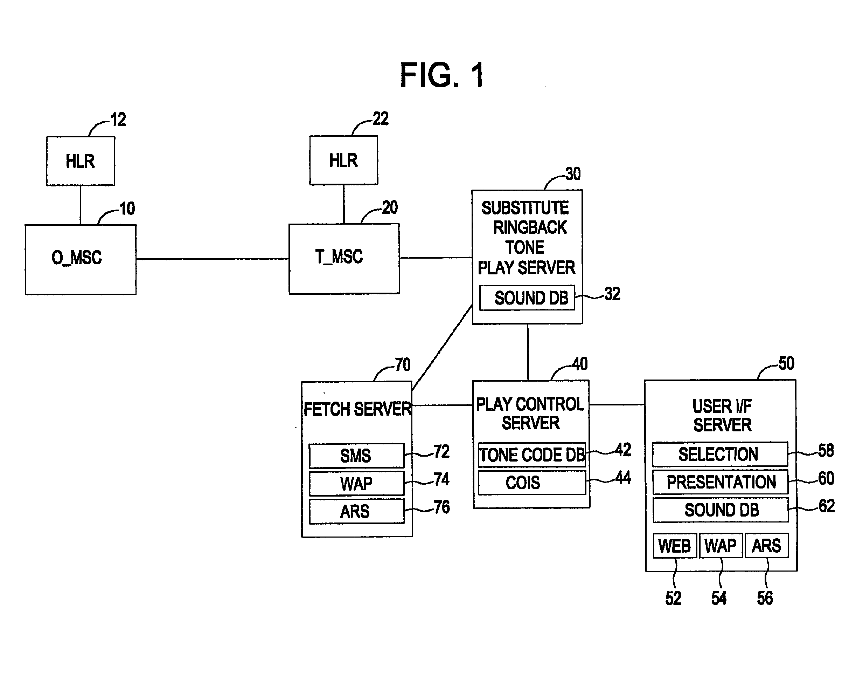

Referring to FIG. 1, in a mobile communications system for implementing the method of setting substitute ringback tone of the present invention, an originating switch (O_MSC) 10 and terminating switch (T_MSC) 20 are connected to each other, and connected also to respective Home Location Registers (HLR) 12 and 22. The HLR 12 or 22 is a register having a function of intra-network database and maintains information of subscribers and positions of subscriber terminals as well known in the art. Even though the originating switch 10 and the terminating switch 20 is connected to respective HLRs in FIG. 1, a single HLR may provide services to both of the switches. Also, it should be noted that the roles of the switches 10 and 20 may be exchanged depending on the call setup process, and a single physical switch can carry out the roles of the two switches when a calling party and a called party is located in the service area of the single switch.

When a terminal in its service area performs a registration, the switch registers the position information in the HLR. The terminating switch 20 stores, in its Visitors Locations Register (VLR), the service subscription information of the terminal in its service area and the routing information for routing a call to the substitute ringback tone play server 30, and provides the substitute ringback tone service whenever a call terminating to the terminal is generated as described below.

The play server 30 is connected to the terminating switch 20. The play server 30 is equipped with various substitute ringback tone files in the sound database (DB) 32. When a call is set up between the terminating switch 20 and play server 30 for the substitute ringback tone service, the play server 30 queries the sound information designated to the called party to the play control server 40. Subsequently, the play server 30 reads out the substitute ringback tone file in the sound DB 32 corresponding to the sound information to reproduce and provide to the calling party through the terminating switch 20 and the originating switch 10.

The play control server 40 includes a subscriber substitute tone information DB 42 for storing the substitute tone information for each service subscriber. The lay control server 40 provides the substitute tone information for a subscriber to the play server 30 in response to a request of the play server 30. Further, the play control server 40 may include a Customer-oriented information system (COIS) 44 for managing the service subscriber information. The COIS 44 provides the service subscriber information of a user upon receiving a request of the play control server 40.

The play control server 40 is connected to a subscriber interface (I/F) server 50 for enabling a user to request to change the substitute ringback tone or present a substitute ringback tone to another person. The subscriber I/F server 50 includes a WEB service unit 52 for enabling a user to access through the Internet, a WAP service unit 54 for enabling a user to access through the WAP-based wireless Internet, and a ARS unit 56 for enabling a user to access through the voice communications network. Functionally, the subscriber I/F server 50 includes a substitute tone selection module 58 for enabling a user to select a substitute tone, a presentation module 60 for enabling a user to present a substitute tone to another person, and a sound DB 62 for storing various substitute ringback tone files similarly to the play server 30.

The substitute tone selection module 58 provides a 'listening trial' service by reproducing a substitute ringback tone file in the sound DB 62 in response to a request of a user. When the user wishes to select or change the substitute tone, the substitute tone selection module 58 provides a terminal identification code (e.g., phone number) of the user and the code of the selected substitute tone to the play control server 40, so that the play control server 40 stores such information. When the user wishes to present a substitute tone to another person, the presentation module 60 requests and receives the phone number of the recipient, temporarily stores the phone number and the code of the selected substitute tone, and requests the recipient to confirm the receipt of the present by sending a short message containing the callback URL of the system. When the present recipient connects and requests to set up the substitute tone, the presentation module 60 stores the terminal identification code of the recipient and the code of the selected substitute tone to the play control server 40, so that the play control server 40 stores such information.

A fetch server 70 stores the substitute tone code of the called party in response to the request of the calling party, and includes a SMS unit 72, a WAP unit 74, and a ARS unit 76. A user who feels like selecting the substitute ringback tone of the called party while hearing the substitute ringback tone can submit a fetch request by pressing a certain key or a certain key input sequence. The fetch request is transmitted to the play server 30 via the terminating switch 20, and the play server 30 transmits the phone number of the calling party and the substitute tone code of the called party to the fetch server 70, so that the fetch server 70 stores such information. Here, the fetch server 70 may request the calling party to confirm the change of the substitute tone by sending a short message containing the callback URL of the system. When the calling party connects and requests to set up the substitute tone, the fetch server 70 provides the phone number of the calling party and the substitute tone code of the called party to the play control server 40 so that the play control server 40 stores the information.

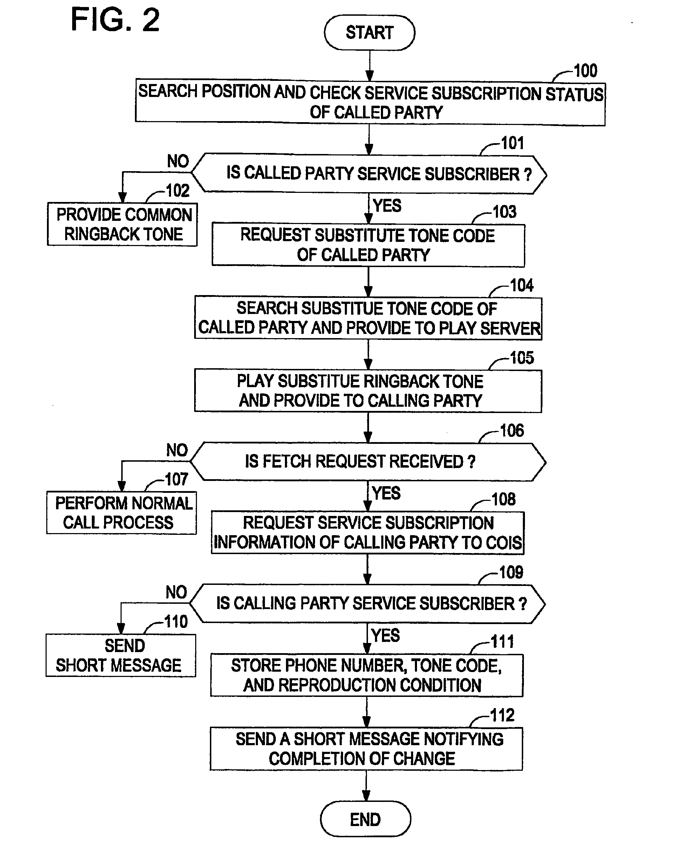

FIG. 2 shows a first embodiment of the method of setting substitute ringback tone of the present invention. In the present embodiment, the fetch server 70 immediately changes the substitute ringback tone of the calling party to be identical with that of the called party upon receiving the fetch request of the calling party.

When the calling party generates a call to a called party subscribed to the substitute ringback tone service, the originating switch 10 requests the position information of the called party to the HLR 12. The HLR 12 requests a routing information to the terminating switch 20 responsible for the called party terminal, and responds to the originating switch 10 by providing termination position information including the routing information. The originating switch 10 tries a ISUP call to the terminating switch 20 using the termination position information. Subsequently, the terminating switch 20 acquires the service subscription information of the called party from the HLR 22 using the called party identification information, and determines whether the called party is subscribed to the substitute ringback tone service (steps 100 and 101). If the called party is not subscribed to the service, the terminating switch 20 provides common ringback tone to the calling party (step 102). If, however, it is determined that the called party is subscribed to the service in the step 101, the terminating switch 20 suspends the call to the called party and routes the call to the play server 30.

In step 103, the play server 30 requests the substitute tone code previously selected and designated by the called party to the play control server 40. The play control server 40 searches the substitute tone code of the called party from the substitute tone information DB 42 and provides the code information to the play server 30 (step 104). The play server 30 reads out the substitute tone file from the sound DB 32 using the code information and reproduces the substitute tone to provide to the calling party through the switches 20 and 10 (step 105).

Afterwards, the play server 30 checks whether there is any key input corresponding to the fetch request from the calling party during the tone is being played (step 106). If there is no fetch request key input, a call channel is set up between the calling party and the called party normally and then the call is completed (step 107). If a fetch request is received from the calling party, however, the fetch server 70 receives the phone number of the caller from the switch 30 or the play server 30, and requests the service subscription information of the calling party to the COIS 44 to determine whether the calling party is subscribed to the substitute ringback tone service (steps 108 and 109).

If the calling party is not subscribed to the substitute ringback tone service in the step 109, the fetch server 70 sends a short message containing the callback URL of the system to the calling party for advising the subscription of the service (step 110). On the other hand, if it is determined that the calling party is subscribed to the substitute ringback tone service in the step 109, the fetch server 70 stores the phone number of the calling party and the substitute tone code of the called party to the play control server 40. At this time, a certain reproduction condition may be stored along with the substitute tone code. The reproduction condition may be a default condition under which a single substitute ringback tone designated by the user is played regardless of the caller or the reproduction time. The reproduction condition, however, may include a reproduction time condition for limiting the time on which the substitute ringback tone is reproduced, and a reproduction target condition for limiting the callers to whom the substitute ringback tone is reproduced (step 111).

In step 112, the fetch server 70 notifies the completion of change of the substitute ringback tone by sending a short message containing some information stored in the play control server 40 to the calling party (step 112).

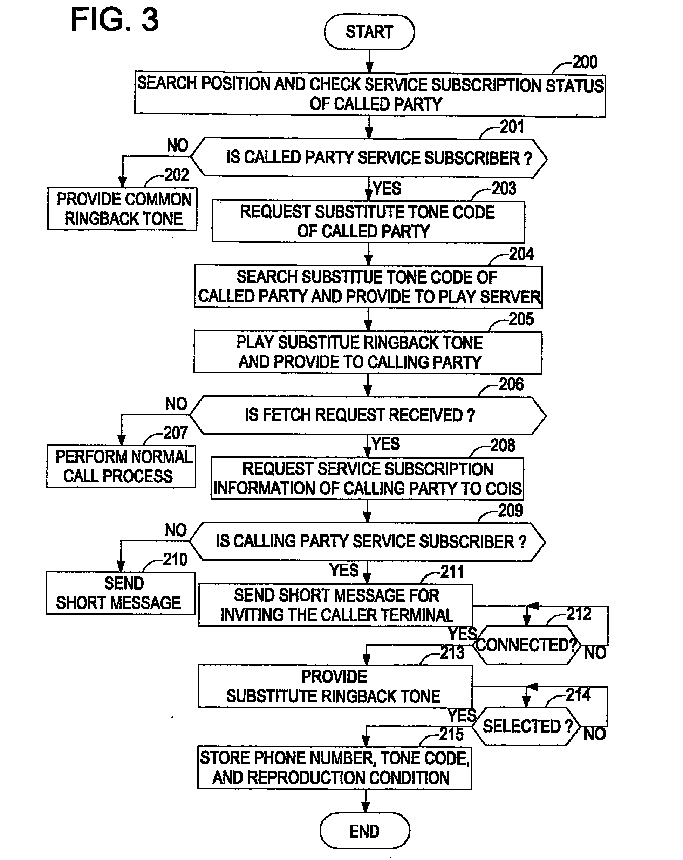

FIG. 3 shows a second embodiment of the method of setting substitute ringback tone of the present invention. In the present embodiment, the fetch server 70 changes the substitute ringback tone of the calling party to be identical with that of the called party after receiving a confirmation of the calling party.

Steps 200 - 210 in FIG. 3 are similar to steps 100 - 110 in FIG. 2. That is, when the calling party generates a call to a called party subscribed to the substitute ringback tone service, the originating switch 10 acquires the position information of the called party from the HLR 12, and tries a ISUP call to the terminating switch 20 using the termination position information. Subsequently, the terminating switch 20 acquires the service subscription information of the called party from the HLR 22, and determines whether the called party is subscribed to the substitute ringback tone service (steps 200 and 201). If the called party is not subscribed to the service, the terminating switch 20 provides common ringback tone to the calling party (step 202). If, however, it is determined that the called party is subscribed to the service in the step 101, the terminating switch 20 suspends the call to the called party and routes the call to the play server 30.

In steps 203 and 204, the play server 30 acquires the substitute tone code previously selected and designated by the called party from the play control server 40, and reads out the substitute tone file from the sound DB 32 using the code information and reproduces the substitute tone to provide to the calling party through the switches 20 and 10 (step 205).

Afterwards, the play server 30 checks whether there is any key input corresponding to the fetch request from the calling party during the tone is being played (step 206). If there is no fetch request key input, a call channel is set up between the calling party and the called party normally and then the call is completed (step 207). If a fetch request is received from the calling party, however, the fetch server 70 receives the phone number of the caller from the switch 30 or the play server 30, and requests the service subscription information of the calling party to the COIS 44 to determine whether the calling party is subscribed to the substitute ringback tone service (steps 208 and 209). If the calling party is not subscribed to the substitute ringback tone service in the step 209, the fetch server 70 sends a short message containing the callback URL of the system to the calling party for advising the subscription of the service (step 210).

On the other hand, if it is determined that the calling party is subscribed to the substitute ringback tone service in the step 209, the fetch server 70 sends a short message containing a callback URL and the tone code of the called party, so that the calling party visits the user I/F server 50 after the completion of the call to request or confirm the change of the substitute ringback tone (step 211). If the caller terminal is connected to the user I/F server 50 using the callback URL or through the ARS or the Internet, the user I/F server 50 provides the substitute ringback tone to the caller terminal (step 213). If the caller selects the substitute ringback tone, the user I/F server 50 provides the phone number of the calling party and the substitute tone code of the called party to the play control server 40, so that the play control server 40 stores the information (steps 214 and 215). At this time, reproduction conditions mentioned above may also be stored along with the substitute tone code.

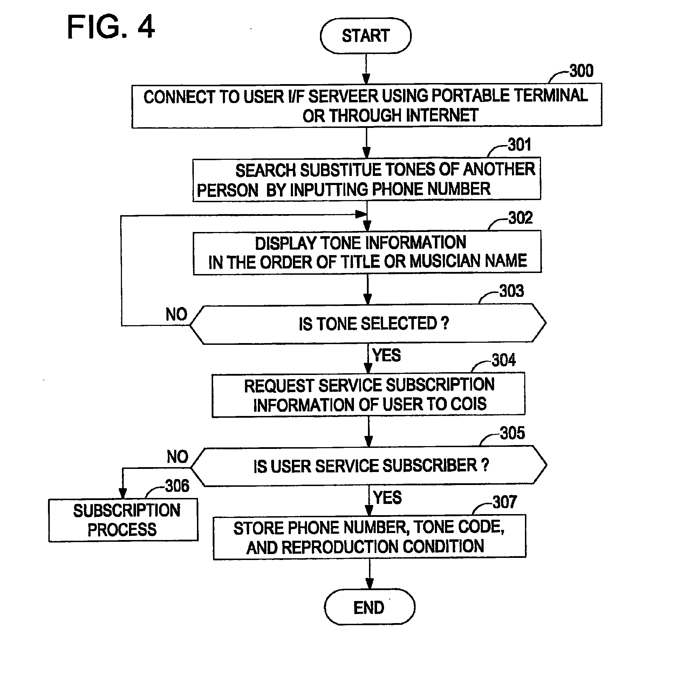

FIG. 4 shows a third embodiment of the method of setting substitute ringback tone of the present invention. According to the present embodiment, the user can set the substitute ringback tone to be identical with that of another user by accessing the system at any time after the completion of a call.

First, the user connects to the subscriber I/F server 50 through the WAP-based wireless Internet, for example, using the portable terminal. At this time, the user may connect to the subscriber 1/F server 50 by calling to the ARS subsystem or through the common Internet using another data terminal, as well (step 300). If the user wishes to set the substitute ringback tone to be identical with that of another person, the user requests the subscriber I/F server 50 to search substitute ringback tones of the person by inputting the phone number of the person (step 301). Upon receiving the search request, the subscriber I/F server 50 requests the play control server 40 to perform the search. The play control server 40 searches the tone code information set for the phone number from the tone information DB 42 and provides the search result to the subscriber I/F server 50. In case that a plurality of substitute ringback tones are set for playing under respective reproduction condition such as target callers or the time, a list containing all the substitute ringback tone information is provided to the subscriber I/F server 50. The subscriber I/F server 50 displays the substitute ringback tone information from the play control server 40 in the order of title of the tone or the name of the musician (step 302).

If the user selects one of the sound in step 303, the subscriber I/F server 50 requests the play control server 40 to check whether the user is subscribed to the substitute ringback tone service (step 304). The play control server 40 checks the service subscription information of the user referring to the information stored in the COIS 44, and provide the checking result to the subscriber I/F server 50. If the user is not subscribed to the substitute ringback tone service in the step 305, the subscriber I/F server 50 guides the subscription of the service to the user and may carry out the subscription process depending on the choice of the user (step 306). On the other hand, if it is determined that the user is subscribed to the substitute ringback tone service in the step 305, the subscriber I/F server 50 provides the phone number of the user and the selected substitute tone code to the play control server 40 so that the play control server 40 stores the information (step 307). At this time, reproduction conditions mentioned above may also be stored along with the substitute tone code.

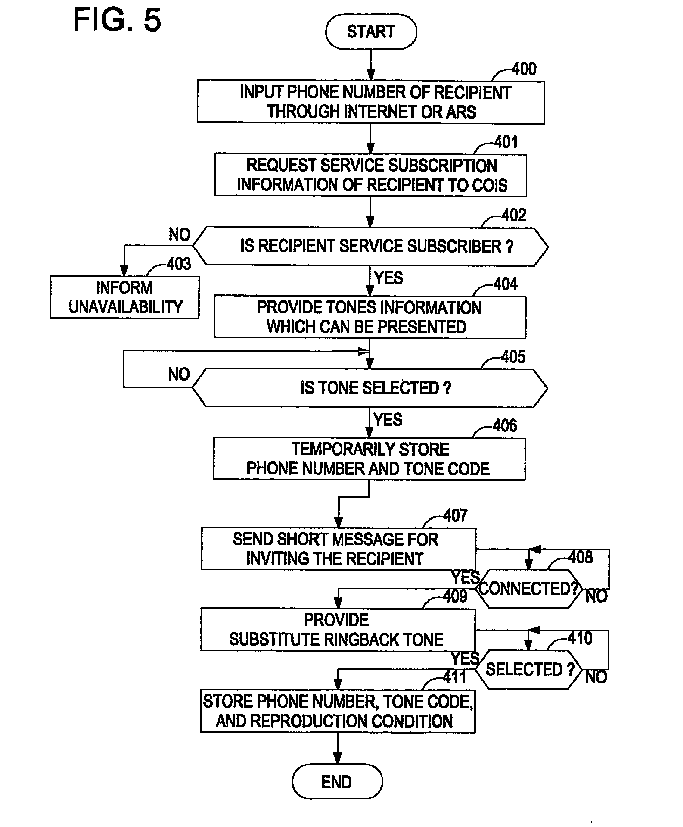

FIG. 5 shows a fourth embodiment of the method of setting substitute ringback tone of the present invention. The present embodiment enables a user to present a substitute ringback tone to another person.

A user who wishes to present the substitute ringback tone to another person first connects to the subscriber I/F server 50 through the Internet or by calling to the ARS subsystem. After accessing the subscriber I/F server 50, the user selects a 'presentation' menu and specifies the recipient by inputting the phone number of the recipient (step 400). After receiving the presentation request, the subscriber I/F server 50 requests the play control server 40 to check whether the recipient is subscribed to the substitute ringback tone service (step 401).

The play control server 40 checks the service subscription information of the recipient referring to the information stored in the COIS 44, and provide the checking result to the subscriber I/F server 50. If the recipient is not subscribed to the substitute ringback tone service in step 402, the subscriber I/F server 50 provides a message that the service is not available for the recipient and completes the process (step 403).

On the other hand, if it is determined that the recipient is subscribed to the substitute ringback tone service in the step 402, the subscriber I/F server 50 makes the user to search a substitute ringback tone to be presented, and provides a 'listening trial' service by reproducing the selected substitute ringback tone file in response to the request of the user (step 404). If the user completes the selection of the substitute ringback tone to be presented in step 405, the subscriber I/F server 50 temporarily stores the phone number of the recipient and the code of the selected substitute tone, and sends a short message containing the callback URL, so that the recipient visits the subscriber I/F server 50 and confirms the use of the presented substitute tone (steps 406 and 407).

If the recipient visits the user I/F server 50 using the callback URL or through the ARS or the Internet in the step 408, the user I/F server 50 provides the substitute ringback tone to the recipient and advises the method of confirming the receipt (step 409). If the recipient selects the substitute ringback tone, the user I/F server 50 provides the phone number of the recipient and the presented substitute tone code to the play control server 40, so that the play control server 40 stores the information (steps 410 and 411). At this time, reproduction conditions mentioned above may also be stored along with the substitute tone code.

Although the present invention has been described in detail above, it should be understood that the foregoing description is illustrative and not restrictive. Those of ordinary skill in the art will appreciate that many obvious modifications can be made to the invention.

### Industrial Applicability

According to the present invention, when a calling party feels the substitute ringback tone of the called party while hearing the substitute tone of the called party, the called party can easily set the substitute ringback tone of his or her own to be identical with that of the called party. The calling party submits the fetch request just by pressing a predetermined key input sequence, and the system changes the substitute ringback tone of the called party immediately or after obtaining the confirmation of the called party. Also, the user can access the system and set the substitute ringback tone to be identical with that of another user or present a substitute ringback tone to a third party.

Accordingly, the method of present invention can enhances the satisfaction of the substitute ringback tone service users, and increase the revenue of the contents providers providing the services and that of the carrier operating the wireless communications network.

## Claims

1. In a system connected to a mobile switching center to provide a substitute ringback tone to a caller terminal when the mobile switching center suspends a call to a called terminal and requests a service by providing an identification code of the called terminal, a method of setting the substitute ringback tone comprising the steps of
(a) providing a play control server for storing substitute ringback tone information set for each service subscriber, and a play server for storing various substitute ringback tones and reproducing and providing one of the various substitute ringback tones in response to the request of the mobile switching center and based on the setting information stored in the play control server;
(b) receiving a call including the identification code of the called terminal from the mobile switching center;
(c) identifying a tone code for the called terminal from the play control server, and reproducing the substitute ringback tone having an identified tone code to provide to the caller terminal;
(d) checking whether a predetermined key input is received from the caller terminal; and
(e) when the predetermined key input is received from the caller terminal, checking the identification code of the caller terminal and the tone code for the called terminal to store in the play control server,
whereby the substitute ringback tone of the caller terminal is set to be identical with the substitute ringback tone of the called terminal.

2. The method as claimed in claim 1, further comprising a step of:
(f) sending a short message to the caller terminal for notifying change of the substitute ringback tone.

3. The method as claimed in claim 1, wherein said step (e) comprises the steps of:
(e1) Upon receiving the predetermined key input, determining whether the caller terminal is subscribed to the substitute ringback tone service; and
(e2) when the caller terminal is not subscribed to the substitute ringback tone service, sending a short message to the caller terminal for advising the subscription of the service.

4. In a system connected to a mobile switching center to provide a substitute ringback tone to a caller terminal when the mobile switching center suspends a call to a called terminal and requests a service by providing an identification code of the called terminal, a method of setting the substitute ringback tone comprising the steps of:
(a) providing a play control server for storing substitute ringback tone information set for each service subscriber, and a play server for storing various substitute ringback tones and reproducing and providing one of the various substitute ringback tones in response to the request of the mobile switching center and based on the setting information stored in the play control server;
(b) receiving a call including the identification code of the called terminal from the mobile switching center;
(c) identifying a tone code for the called terminal from the play control server, and reproducing the substitute ringback tone having an identified tone code to provide to the caller terminal;
(d) checking whether a predetermined key input is received from caller terminal;
(e) when the predetermined key input is received from the caller terminal, sending a short message containing a callback information of the system to the caller terminal for inviting the caller terminal to connect to the system;
(f) when the caller terminal is connected to the system, receiving a confirmation for change of the substitute ringback tone; and
(g) storing the identification code of the caller terminal and the tone code for the called terminal in the play control server.

5. The method as claimed in claim 4, wherein said step (e) comprises the steps of:
(e1) Upon receiving the predetermined key input, determining whether the caller terminal is subscribed to the substitute ringback tone service; and
(e2) when the caller terminal is not subscribed to the substitute ringback tone service, sending a short message to the caller terminal for advising the subscription of the service.

6. The method as claimed in claim 4, wherein said step (f) comprises the step of:
receiving reproduction conditions including reproduction time and callers for reproducing the substitute ringback tone,
wherein the conditions are stored in said step (g).

7. In a system connected to a mobile switching center to provide a substitute ringback tone to a caller terminal when the mobile switching center suspends a call to a called terminal and requests a service by providing an identification code of the called terminal, a method of setting the substitute ringback tone comprising the steps of:
(a) providing a play control server for storing substitute ringback tone information set for each service subscriber, and a play server for storing various substitute ringback tones and reproducing and providing one of the various substitute ringback tones in response to the request of the mobile switching center and based on the setting information stored in the play control server;
(b) receiving a phone number of a third party from a user through a communications network;
(c) identifying the substitute ringback tone of the third party from the play control server;
(d) receiving, from the user, a confirmation for change of the substitute ringback tone of the user in such a way that the substitute ringback tone of the user is set to be identical with the substitute ringback tone of the third party; and
(e) storing the phone number of the user and the tone code for the third party in the play control server.

8. The method as claimed in claim 7, further comprising a step of:
determining whether the user is subscribed to the substitute ringback tone service, wherein, a short message for advising the subscription of the service is sent to the user terminal when the user is not subscribed to the substitute ringback tone service, and said steps ©through (e) are performed only when the user is subscribed to the substitute ringback tone service.

9. The method as claimed in claim 7, wherein the communications network is the Internet, the wireless Internet, or a voice communications network.

10. In a system connected to a mobile switching center to provide a substitute ringback tone to a caller terminal when the mobile switching center suspends a call to a called terminal and requests a service by providing an identification code of the called terminal, a method of setting the substitute ringback tone comprising the steps of:
(a) providing a play control server for storing substitute ringback tone information set for each service subscriber, and a play server for storing various substitute ringback tones and reproducing and providing one of the various substitute ringback tones in response to the request of the mobile switching center and based on the setting information stored in the play control server;
(b) receiving, from a user through a communications network, a phone number of a third party and information of selected substitute ringback tone to be presented to the third party;
(c) temporarily storing the identification code of the third party and sending a short message containing a callback information of the system to the third party for inviting the third party to connect to the system;
(d) when the third party is connected to the system, receiving a confirmation for change of the substitute ringback tone of the third party into the presented tone; and
(e) storing the identification code of the third party and the selected tone code in the play control server.

11. The method as claimed in claim 4, wherein said step (c) comprises the steps of:
(c1) determining whether the third party is subscribed to the substitute ringback tone service; and
(c2) sending a short message for advising the subscription of the service to the third party in case that the third party is not subscribed to the substitute ringback tone service, and sending a short message for inviting the third party to connect to the system when the third party is subscribed to the substitute ringback tone service.

## Patentansprüche

1. In einem System, verbunden mit einer mobilen Vermittlungseinrichtung zum Bereitstellen eines Austauschfreizeichentones am Endgerät eines Anrufers wenn die mobile Vermittlungseinrichtung einen Anruf an ein angerufenes Endgerät aussetzt und einen Service durch Bereitstellen eines Identifikationscodes des angerufenen Endgerätes anfordert, ein Verfahren zum Einstellen eines Austauschfreizeichentones, aufweisend die Schritte
(a) Bereitstellen eines Abspielkontrollservers zum Speichern von Austauschfreizeichentoninformation, festgelegt für jeden Dienstteilnehmer, und einen Abspielserver zum Speichern von verschiedenen Austauschfreizeichentönen und Wiedergeben und Bereitstellen eines der verschiedenen Austauschfreizeichentöne in Reaktion auf die Anforderung der mobilen Vermittlungseinrichtung und basierend auf im Abspielkontrollserver gespeicherten die Einstellungsinformation;
(b) Empfangen eines Anrufs von der mobilen Vermittlungseinrichtung aufweisend den Identifikationscode des angerufenen Endgerätes;
(c) Identifizieren eines Toncodes für das angerufene Endgerät vom Abspielkontrollserver und Wiedergeben des Austauschfreizeichentones zum Bereitstellen an das Endgerät des Anrufers aufweisend einen identifizierten Toncode;
(d) Überprüfen, ob eine vorbestimmte Tasteneingabe vom Endgerät des Anrufers empfangen wird; und
(e) falls eine vorbestimmte Tasteneingabe vom Endgerät des Anrufers empfangen wird, Überprüfen des Identifikationscodes des Endgerät des Anrufers und des Toncodes des angerufenen Endgerätes zum Speichern im Abspielkontrollserver,
wobei der Austauschfreizeichenton des Endgerät des Anrufers derart gesetzt wird, um identisch mit dem Austauschfreizeichenton des angerufenen Endgerätes zu sein.

2. Das Verfahren gemäß Anspruch 1, weiterhin aufweisend einen Schritt (f) Senden einer Kurzmitteilung an das Endgerät des Anrufers zur Benachrichtigung der Änderung des Austauschfreizeichentones.

3. Das Verfahren gemäß Anspruch 1, wobei Schritt (e) die Schritte aufweist:
(e1) Bei Empfang der vorbestimmten Tasteneingabe bestimmen, ob das Endgerät des Anrufers den Austauschfreizeichentonservice abonniert hat; und
(e2) Im Falle, dass das Endgerät des Anrufers den Austauschfreizeichentonservice nicht abonniert hat, Senden einer Kurznachricht an das Endgerät des Anrufers zum Empfehlen des Abonnierens des Services.

4. In einem System, verbunden mit einer mobilen Vermittlungseinrichtung zum Bereitstellen eines Austauschfreizeichentones am Endgerät eines Anrufers wenn die mobile Vermittlungseinrichtung einen Anruf an ein angerufenes Endgerät aussetzt und einen Service anfordert durch Bereitstellen eines Identifikationscodes des angerufenen Endgerätes, einem Verfahren zum Einstellen eines Austauschfreizeichentones aufweisend die Schritte:
(a) Bereitstellen eines Abspielkontrollservers zum Speichern einer Austauschfreizeichentoninformation, festgelegt für jeden Dienstteilnehmer, und einen Abspielserver zum Speichern von verschiedenen Austauschfreizeichentönen und Wiedergeben und Bereitstellen eines der verschiedenen Austauschfreizeichentöne in Reaktion auf die Aufforderung der mobilen Vermittlungseinrichtung und basierend auf im Abspielkontrollserver gespeicherten Einstellungsinformationen;
(b) Empfangen eines Anrufs von der mobilen Vermittlungseinrichtung aufweisend den Identifikationscode des angerufenen Endgerätes;
(c) Identifizieren eines Toncodes des angerufenen Endgerätes vom Abspielkontrollserver und Wiedergeben des Austauschfreizeichentones zum Bereitstellen an das Endgerät des Anrufers aufweisend einen identifizierten Toncode;
(d) Überprüfen, ob eine vorbestimmte Tasteneingabe vom Endgerät des Anrufers empfangen wird;
(e) falls die vorbestimmte Tasteneingabe vom Anruferendgerät empfangen wird, Senden einer Kurznachricht an das Endgerät des Anrufers, aufweisend eine Rückrufinformation des Systems zum Auffordern des Endgerät des Anrufers zum Verbinden mit dem System;
(f) wenn das Endgerät des Anrufers mit dem System verbunden ist, Empfangen einer Bestätigung zur Änderung eines Austauschfreizeichentones; und
(g) Speichern des Identifikationscodes des Endgerät des Anrufers und des Toncodes des angerufenen Endgerätes im Abspielkontrollserver.

5. Das Verfahren gemäß Anspruch 4, wobei der Schritt (e) die Schritte aufweist:
(e1) Bei Empfang der vorbestimmten Tastatureingabe bestimmen, ob das Endgerät des Anrufers den Austauschfreizeichentonservice abonniert hat; und
(e2) Im Falle, dass das Endgerät des Anrufers den Austauschfreizeichentonservice nicht abonniert hat, Senden einer Kurznachricht an das Endgerät des Anrufers zum Empfehlen der Abonnierung des Service.

6. Das Verfahren gemäß Anspruch 4, wobei Schritt (f) den Schritt aufweist:
Empfang von Wiedergabebedingungen, aufweisend Wiedergabezeit und Anrufer zum Wiedergeben des Austauschfreizeichentones;
wobei die Bedingungen in Schritt (g) gespeichert werden.

7. In einem System, verbunden mit einer mobilen Vermittlungseinrichtung zum Bereitstellen eines Austauschfreizeichentones am Endgerät eines Anrufers wenn die mobile Vermittlungseinrichtung einen Anruf an ein angerufenes Endgerät aussetzt und einen Service durch Bereitstellen eines Identifikationscodes des angerufenen Endgerätes anfordert, ein Verfahren zum Einstellen eines Austauschfreizeichentones, aufweisend die Schritte
(a) Bereitstellen eines Abspielkontrollservers zum Speichern von Austauschfreizeichentoninformation, festgelegt für jeden Dienstteilnehmer, und einen Abspielserver zum Speichern von verschiedenen Austauschfreizeichentönen und Wiedergeben und Bereitstellen eines der verschiedenen Austauschfreizeichentöne in Reaktion auf die Anforderung der mobilen Vermittlungseinrichtung und basierend auf im Abspielkontrollserver gespeicherten die Einstellungsinformation;
(b) Empfangen einer Telefonnummer eines Dritten von einem Teilnehmer durch ein Kommunikationsnetzwerk;
(c) Identifizieren des Austauschfreizeichentones des Dritten vom Abspielkontrollserver;
(d) Empfangen, vom Teilnehmer, einer Bestätigung zum Ändern des Austauschfreizeichentones des Teilnehmers derart, dass der Austauschfreizeichenton des Teilnehmers identisch zum Austauschfreizeichenton des Dritten gesetzt wird; und
(e) Speichern der Telefonnummer des Teilnehmers und des Toncodes des Dritten im Abspielkontrollserver.

8. Das Verfahren gemäß Anspruch 7, weiter aufweisend den Schritt:
Bestimmen, ob der Teilnehmer den Austauschfreizeichentonservice abonniert hat,
wobei eine Kurznachricht zum Empfehlen des Abonnements des Service zum Endgerät des Teilnehmers gesendet wird, wenn der Teilnehmer den
Austauschfreizeichentonservice nicht abonniert hat und die Schritte (c) bis (e) nur
ausgeführt werden, wenn der Teilnehmer den Austauschfreizeichentonservice abonniert hat.

9. Das Verfahren gemäß Anspruch 7, wobei das Kommunikationsnetzwerk das Internet, das drahtlose Internet oder ein Sprachkommunikationsnetzwerk ist.

10. In einem System, verbunden mit einer mobilen Vermittlungseinrichtung zum Bereitstellen eines Austauschfreizeichentones am Endgerät eines Anrufers wenn die mobile Vermittlungseinrichtung einen Anruf an ein angerufenes Endgerät aussetzt und einen Service durch Bereitstellen eines Identifikationscodes des angerufenen Endgerätes anfordert, ein Verfahren zum Einstellen eines Austauschfreizeichentones, aufweisend die Schritte
(a) Bereitstellen eines Abspielkontrollservers zum Speichern von Austauschfreizeichentoninformation, festgelegt für jeden Dienstteilnehmer, und einen Abspielserver zum Speichern von verschiedenen Austauschfreizeichentönen und Wiedergeben und Bereitstellen eines der verschiedenen Austauschfreizeichentöne in Reaktion auf die Anforderung der mobilen Vermittlungseinrichtung und basierend auf im Abspielkontrollserver gespeicherten die Einstellungsinformation;
(b) Empfangen von einem Teilnehmer mittels eines Kommunikationsnetzwerkes einer Telefonnummer eines Dritten und Information eines ausgewählten Austauschfreizeichentones, welcher dem Dritten dargeboten werden soll;
(c) temporäres Speichern des Identifikationscodes des Dritten und Senden einer Kurznachricht, aufweisend Rückrufinformation des Systems an den Dritten zum Einladen des Dritten zum Verbinden mit dem System;
(d) wenn der Dritte mit dem System verbunden ist, Empfangen einer Bestätigung zum Wechsel des Austauschfreizeichentones des Dritten in den dargebotenen Ton; und
(e) Speichern des Identifikationscodes des Dritten und des ausgewählten Toncodes im Abspielkontrollserver.

11. Das Verfahren gemäß Anspruch 4, wobei Schritt (c) aufweist die Schritte:
(c1) Bestimmen, ob der Dritte den Austauschfreizeichentonservice abonniert hat; und
(c2) Senden einer Kurznachricht zum Empfehlen des Abonnements des Services an den Dritten im Falle, dass der Dritte nicht den Austauschfreizeichentonservice abonniert hat, und Senden einer Kurznachricht zum Einladen des Dritten zum Verbinden mit dem System, wenn der Dritte den Austauschfreizeichentonservice abonniert hat.

## Revendications

1. Dans un système connecté à un centre de commutation mobile pour fournir une tonalité de retour d'appel de substitution à un terminal appelant lorsque le centre de commutation mobile suspend un appel vers un terminal appelé et demande un service en fournissant un code d'identification du terminal appelé, procédé d'établissement de la tonalité de retour d'appel de substitution comprenant les étapes consistant à :
(a) fournir un serveur de commande de lecture pour stocker un ensemble d'informations de tonalité de retour d'appel de substitution pour chaque abonné au service, et un serveur de lecture pour stocker diverses tonalités de retour d'appel de substitution et reproduire et fournir une des diverses tonalités de retour d'appel de substitution en réponse à la demande du centre de commutation mobile et sur la base des informations d'établissement stockées dans le serveur de commande de lecture ;
(b) recevoir un appel incluant le code d'identification du terminal appelé en provenance du centre de commutation mobile ;
(c) identifier un code de tonalité pour le terminal appelé à partir du serveur de commande de lecture, et reproduire la tonalité de retour d'appel de substitution ayant un code de tonalité identifié à fournir au terminal appelant ;
(d) vérifier si une entrée de touche prédéterminée est reçue en provenance du terminal appelant ; et
(e) lorsque l'entrée de touche prédéterminée est reçue en provenance du terminal appelant, vérifier le code d'identification du terminal appelant et le code de tonalité pour le terminal appelé à stocker dans le serveur de commande de lecture,
moyennant quoi la tonalité de retour d'appel de substitution du terminal appelant est établie pour être identique à la tonalité de retour d'appel de substitution du terminal appelé.

2. Procédé selon la revendication 1, comprenant en outre une étape consistant à :
(f) envoyer un message court au terminal appelant pour notifier un changement de la tonalité de retour d'appel de substitution.

3. Procédé selon la revendication 1, dans lequel ladite étape (e) comprend les étapes consistant à :
(e1) à la réception de l'entrée de touche prédéterminée, déterminer si le terminal appelant est abonné au service de tonalité de retour d'appel de substitution ; et
(e2) lorsque le terminal appelant n'est pas abonné au service de tonalité de retour d'appel de substitution, envoyer un message court au terminal appelant pour conseiller l'abonnement au service.

4. Dans un système connecté à un centre de commutation mobile pour fournir une tonalité de retour d'appel de substitution à un terminal appelant lorsque le centre de commutation mobile suspend un appel vers un terminal appelé et demande un service en fournissant un code d'identification du terminal appelé, procédé d'établissement de la tonalité de retour d'appel de substitution comprenant les étapes consistant à :
(a) fournir un serveur de commande de lecture pour stocker un ensemble d'informations de tonalité de retour d'appel de substitution pour chaque abonné au service, et un serveur de lecture pour stocker diverses tonalités de retour d'appel de substitution et reproduire et fournir une des diverses tonalités de retour d'appel de substitution en réponse à la demande du centre de commutation mobile et sur la base des informations d'établissement stockées dans le serveur de commande de lecture ;
(b) recevoir un appel incluant le code d'identification du terminal appelé en provenance du centre de commutation mobile ;
(c) identifier un code de tonalité pour le terminal appelé à partir du serveur de commande de lecture, et reproduire la tonalité de retour d'appel de substitution ayant un code de tonalité identifié à fournir au terminal appelant ;
(d) vérifier si une entrée de touche prédéterminée est reçue en provenance du terminal appelant ; et
(e) lorsque l'entrée de touche prédéterminée est reçue en provenance du terminal appelant, envoyer un message court contenant une information de rappel du système au terminal appelant pour inviter le terminal appelant à se connecter au système ;
(f) lorsque le terminal appelant est connecté au système, recevoir une confirmation de changement de la tonalité de retour d'appel de substitution ; et
(g) stocker le code d'identification du terminal appelant et le code de tonalité pour le terminal appelé dans le serveur de commande de lecture.

5. Procédé selon la revendication 4, dans lequel ladite étape (e) comprend les étapes consistant à :
(e1) à la réception de l'entrée de touche prédéterminée, déterminer si le terminal appelant est abonné au service de tonalité de retour d'appel de substitution ; et
(e2) lorsque le terminal appelant n'est pas abonné au service de tonalité de retour d'appel de substitution, envoyer un message court au terminal appelant pour conseiller l'abonnement au service.

6. Procédé selon la revendication 4, dans lequel ladite étape (f) comprend les étapes consistant à :
recevoir des conditions de reproduction incluant un temps de reproduction et des appelants pour reproduire la tonalité de retour d'appel de substitution,
dans lequel les conditions sont stockées à ladite étape (g).

7. Dans un système connecté à un centre de commutation mobile pour fournir une tonalité de retour d'appel de substitution à un terminal appelant lorsque le centre de commutation mobile suspend un appel vers un terminal appelé et demande un service en fournissant un code d'identification du terminal appelé, procédé d'établissement de la tonalité de retour d'appel de substitution comprenant les étapes consistant à :
(a) fournir un serveur de commande de lecture pour stocker un ensemble d'informations de tonalité de retour d'appel de substitution pour chaque abonné au service, et un serveur de lecture pour stocker diverses tonalités de retour d'appel de substitution et reproduire et fournir une des diverses tonalités de retour d'appel de substitution en réponse à la demande du centre de commutation mobile et sur la base des informations d'établissement stockées dans le serveur de commande de lecture ;
(b) recevoir un numéro de téléphone d'un tiers en provenance d'un utilisateur par l'intermédiaire d'un réseau de communications ;
(c) identifier la tonalité de retour d'appel de substitution du tiers à partir du serveur de commande de lecture ;
(d) recevoir, en provenance de l'utilisateur, une confirmation de changement de la tonalité de retour d'appel de substitution de l'utilisateur de telle sorte que la tonalité de retour d'appel de substitution de l'utilisateur soit établie identique à la tonalité de retour d'appel de substitution du tiers ; et
(e) stocker le numéro de téléphone de l'utilisateur et le code de tonalité pour le tiers dans le serveur de commande de lecture.

8. Procédé selon la revendication 7, comprenant en outre une étape consistant à :
déterminer si l'utilisateur est abonné au service de tonalité de retour d'appel de substitution,
dans lequel, un message court pour conseiller l'abonnement au service est envoyé au terminal de l'utilisateur lorsque l'utilisateur n'est pas abonné au service de tonalité de retour d'appel de substitution, et lesdites étapes (c) à (e) ne sont effectuées que lorsque l'utilisateur est abonné au service de tonalité de retour d'appel de substitution.

9. Procédé selon la revendication 7, dans lequel le réseau de communications est Internet, Internet sans fil, ou un réseau de communications vocales.

10. Dans un système connecté à un centre de commutation mobile pour fournir une tonalité de retour d'appel de substitution à un terminal appelant lorsque le centre de commutation mobile suspend un appel vers un terminal appelé et demande un service en fournissant un code d'identification du terminal appelé, procédé d'établissement de la tonalité de retour d'appel de substitution comprenant les étapes consistant à :
(a) fournir un serveur de commande de lecture pour stocker un ensemble d'informations de tonalité de retour d'appel de substitution pour chaque abonné au service, et un serveur de lecture pour stocker diverses tonalités de retour d'appel de substitution et reproduire et fournir une des diverses tonalités de retour d'appel de substitution en réponse à la demande du centre de commutation mobile et sur la base des informations d'établissement stockées dans le serveur de commande de lecture ;
(b) recevoir, en provenance d'un utilisateur par l'intermédiaire d'un réseau de communications, un numéro de téléphone d'un tiers et des informations de tonalité de retour d'appel de substitution sélectionnée devant être présentées au tiers ;
(c) stocker temporairement le code d'identification du tiers et envoyer un message court contenant une information de rappel du système au tiers pour inviter le tiers à se connecter au système ;
(d) lorsque le tiers est connecté au système, recevoir une confirmation de changement de la tonalité de retour d'appel de substitution du tiers en la tonalité présentée; et
(e) stocker le code d'identification du tiers et le code de tonalité sélectionné dans le serveur de commande de lecture.

11. Procédé selon la revendication 4, dans lequel ladite étape (c) comprend les étapes consistant à :
(c1) déterminer si le tiers est abonné au service de tonalité de retour d'appel de substitution ; et
(c2) envoyer un message court pour conseiller l'abonnement au service au tiers dans le cas où le tiers n'est pas abonné au service de tonalité de retour d'appel de substitution, et envoyer un message court pour inviter le tiers à se connecter au système lorsque le tiers est abonné au service de tonalité de retour d'appel de substitution.
